# EUROPÄISCHE PATENTSCHRIFT

(11) **EP 1 398 135 B1**
(45) Veröffentlichungstag und Bekanntmachung des Hinweises auf die Patenterteilung: **18.06.2008**
(21) Anmeldenummer: 02020527.4
(22) Anmeldetag: 16.09.2002
(51) Int. Cl.: B29C 63/04

(54) **Vorrichtung und Verfahren zum Ummanteln flexibler, strangförmiger Werkstücke**
Apparatus and method for covering flexible elongated workpieces
Appareil et procédé pour revetir des produits flexibles de forme allongée

(43) Veröffentlichungstag der Anmeldung: 17.03.2004
(73) Patentinhaber: Friz Kaschiertechnik GmbH, 74189 Weinsberg (DE)
(72) Erfinder: Häfele, Thomas, 74182 Obersulm -Affaltrach (DE); Bormann, Frank, 74906 Bad Rappenau-Heinsheim (DE)
(74) Vertreter: HOFFMANN EITLE

(56) Entgegenhaltungen:
- FR-A- 2 809 659

## Beschreibung

### Technisches Gebiet

Die vorliegende Erfindung betrifft eine Vorrichtung und ein Verfahren zum Ummanteln von flexiblen, strangförmigen Werkstücken mit einem streifenförmigen Beschichtungsmaterial.

### Stand der Technik

Im Stand der Technik ist es bekannt, langgestreckte oder plattenförmige, im wesentlichen biegesteife Werkstücke mit verschiedenen Materialen zu beschichten, indem beispielsweise ein bahnförmiges Beschichtungsmaterial aufkaschiert wird. Der Anmelderin bekannt ist eine Vorrichtung zum Durchlaufkaschieren von langgestreckten, strangförmigen biegesteifen Werkstücken. Das zu beschichtende, plattenförmige Element wird mittels Transportrollen entlang einer Förderstrecke bewegt. Beim Passieren einer Ummantelungsrichtung wird ein flächiges Beschichtungsmaterial auf das langgestreckte, strangförmige, biegesteife Werkstück aufkaschiert und das ummantelte Werkstück wird aus der Vorrichtung ausgefördert.

Neben langgestreckten, strangförmigen, biegesteifen Werkstücken gibt es zunehmend auch einen Bedarf, flexible, strangförmige Werkstücke mit einer gewünschten Oberflächenbeschichtung auszustatten. So kommen beispielsweise in der Automobilindustrie in großem Umfang Dichtungsprofile aus Gummi oder ähnlichen Werkstoffen zum Einsatz, die aus optischen und funktionellen Gründen mit textilen bzw. textilähnlichen Stoffen oder flexiblen Kunststoffen ummantelt werden sollen.

Ein Durchlaufummanteln derartiger flexibler, strangförmiger Werkstücke ist mit den Ummantelungsvorrichtungen des Standes der Technik, wie beispielsweise der oben beschriebenen Vorrichtung für langgestreckte, strangförmige, biegesteife Werkstücke, nicht möglich, da die flexiblen, strangförmigen und oft auch hohlen Werkstücke beim Transport durch die Vorrichtung aufgrund ihrer geringen Steifigkeit zum Schleudern und Verdrehen neigen.

Daher erfolgt das Ummanteln flexibler, strangförmiger Werkstücke im Stand der Technik in der Regel stationär durch elektrostatische, chemische oder kombinierte Beflockungsverfahren. Diese besitzen jedoch den Nachteil, dass sie zeit- und arbeitsaufwändig sowie kostenintensiv sind.

Ferner offenbart die FR-A-2809659 eine Vorrichtung nach dem Oberbegriff von Anspruch 1.

### Zusammenfassung der Erfindung

Es ist Ausgabe der vorliegenden Erfindung, eine Vorrichtung zum Ummanteln von flexiblen, strangförmigen Werkstücken mit einem streifenförmigen Beschichtungsmaterial bereitzustellen, das eine vereinfachte und zuverlässige Ummantelung der flexiblen, strangförmigen Werkstücke ermöglicht.

Diese Aufgabe wird erfindungsgemäß durch die Vorrichtung zum Ummanteln von flexiblen, strangförmigen Werkstücken mit einem streifenförmigen Beschichtungsmaterial gemäß Anspruch 1 gelöst.

Der vorliegenden Erfindung liegt der Gedanke zugrunde, dass die Werkstücke nicht lediglich mittels einer Transportvorrichtung, die beispielsweise Transporträder umfasst, angetrieben und gefördert werden, sondern darüber hinaus auch mittels einer Führungseinrichtung derart geführt werden, dass ein Ummanteln von flexiblen, strangförmigen Werkstücken im Durchlaufbetrieb erstmals möglich ist.

Dementsprechend bestehen die mit der Erfindung erzielten Vorteile beispielsweise darin, dass die zu ummantelnden, flexiblen, strangförmigen Werkstücke dank der Führungseinrichtung, die Führungselemente mit jeweils einer Führungsfläche umfasst, während des Durchlaufs in der Vorrichtung stabil und zuverlässig geführt werden. Auf diese Weise wird ein Schleudern und Verdrehen der Werkstücke, wie es im Stand der Technik auftritt, verhindert. Dies erhöht nicht nur die Zuverlässigkeit des Ummantelungsvorganges, sondern macht das Ummanteln derartiger Werkstücke im Durchlaufbetrieb überhaupt erstmals möglich. Mit der geschaffenen Möglichkeit des Durchlaufbetriebes stellen sich weitere vorteilhafte Wirkungen der erfindungsgemäßen Vorrichtung ein. So kann die Ummantelung insgesamt einfacher und schneller durchgeführt werden, da die Werkstücke kontinuierlich, beispielsweise auch als zusammenhängender Strang, ummantelt werden können. Hieraus ergeben sich nicht zuletzt auch vorteilhafte Einsparungen im Hinblick auf den Zeit- und Kostenaufwand.

Die Ausbildung der erfindungsgemäßen Vorrichtung in der Art und Weise einer Zusammenfassung einzelner, verschiedenartig geformter Antriebs-, Führungs- und Funktionselemente ermöglicht erstmals auch die Anpassung der gesamten Ummantelungsanlage an unterschiedlich geformte Außenkonturen flexibler Profile.

Gemäß der vorliegenden Erfindung weist jedes Transportrad auf beiden Seiten in der Durchlaufrichtung ein Führungselement auf, wobei insbesondere zwischen zwei benachbarten Transporträdern jeweils ein Führungselement vorgesehen ist. Hierdurch erhält man eine Konfiguration, in der das zu ummantelnde Werkstück in Durchlaufrichtung sowohl vor als auch hinter dem jeweiligen Transportrad sicher geführt ist. Auf diese Weise wird ein Schleudern und Verdrehen des Werkstücks, das unter normalen Umständen besonders im Bereich der lokalen Einleitung der Antriebskräfte durch die Transporträder auftritt, wirksam verhindert.

Besonders bevorzugt ist es dabei gemäß einer Weiterbildung der vorliegenden Erfindung, dass die Führungsflächen der Führungselemente derart angeordnet sind, dass das Werkstück im wesentlichen entlang der gesamten Förderstrecke entlang der Förderfläche führbar ist. Somit werden Verdrehungen des Werkstücks und dergleichen auf ein Minimum reduziert, so dass die Zuverlässigkeit des Ummantelungsprozesses und die Qualität der Ummantelung selbst erhöht werden.

Insbesondere für die Ummantelung von Werkstücken mit offenem Querschnitt, der beispielsweise zumindest teilweise u-förmig sein kann, ist es gemäß einer Weiterbildung der Erfindung vorgesehen, dass die Führungselemente jeweils einen Führungsabschnitt besitzen, der von der Führungsfläche bevorzugt im wesentlichen senkrecht hervorsteht. Die Führungsabschnitte können in das Innere des Werkstückquerschnitts eingreifen, während die Oberflächenformen des Querschnitts auf der Führungsfläche ruhen bzw. gleiten. Auf diese Weise wird die Gesamtstabilität des flexiblen, strangförmigen Werkstücks während des Durchlaufes weiter verbessert.

In synergetischer Weise können gemäß einer Weiterbildung der Erfindung auch die Transporträder entlang ihrer Umfangsfläche jeweils einen Führungsvorsprung aufweisen, der bevorzugt als im wesentlichen umlaufender Führungsring ausgebildet ist, welcher besonders bevorzugt mit den Führungsabschnitten der Führungselemente fluchtet. Die Führungsabschnitte der Führungselemente und die Führungsvorsprünge der Transporträder ergänzen und verstärken sich dann gegenseitig in ihrer Wirkung.

Auch die Umfangsflächen der Transporträder, welche die Antriebskraft auf das durchlaufende Werkstück übertragen, können gemäß einer Weiterbildung der Erfindung zu einem stabilen Durchlauf des Werkstücks beitragen. Zu diesem Zweck ist es bevorzugt, dass die Umfangsflächen der Transporträder eine adhäsionserzeugende Oberfläche aufweisen und bevorzugt gerändelt sind.

Bei den zu ummantelten Werkstücken handelt es sich, wie oben erwähnt, häufig um teilweise offene oder zerklüftete Profile. Um ein gleichmäßiges Ummanteln derartiger Werkstücke zu erreichen, ist es vorteilhaft, das Werkstück aufzuspreizen, so dass das streifenförmige Beschichtungsmaterial am gesamten Umfang des Werkstücks aufgebracht werden kann. Zu diesem Zweck ist es gemäß einer Weiterbildung der Erfindung bevorzugt, dass die Ummantelungseinrichtung eine Kaschierwalze aufweist, die einen ersten Abschnitt und einen zweiten Abschnitt umfasst, zwischen denen eine erste Spreizeinrichtung, die sich bevorzugt im Wesentlichen parallel zur Durchlaufrichtung des Werkstücks erstreckt, angeordnet ist. Mit Hilfe der ersten Spreizeinrichtung, insbesondere einem Spreizmesser, erfolgt das eigentliche Aufspreizen des Werkstücks, während der erste und der zweite Abschnitt der Kaschierwalze dazu dienen, während des Ummantelungsvorgangs die aufgespreizten Abschnitte des Werkstücks aufgespreizt zu halten und die Ummantelung zu vollziehen.

Insbesondere bei asymmetrischen Werkstückquerschnitten ist es gemäß einer Weiterbildung der vorliegenden Erfindung bevorzugt, dass der erste und der zweite Abschnitt der Kaschierwalze voneinander unterschiedliche Durchmesser aufweisen. Hierdurch wird erreicht, dass der Aufspreiz- und Anpressdruck der Kaschierwalzenabschnitte an dem durchlaufenden Werkstück auch bei asymmetrischen Werkstückquerschnitten weitgehend gleichmäßig ist und somit ein einwandfreies Ummanteln sichergestellt wird.

Auch nach dem Passieren der Kaschierwalze kann es in vielen Fällen erwünscht sein, dass das Werkstück weiter aufgespreizt bleibt, beispielsweise während der nachfolgenden seitlichen Bearbeitung des Werkstücks. Zu diesem Zweck ist es gemäß einer Weiterbildung der Erfindung bevorzugt, dass die erste Spreizeinrichtung einen sich im Durchlaufrichtung hinter der Kaschierwalze bzw. der ersten Spreizeinrichtung erstreckenden Spreizgrad aufweist.

Bei ungleichmäßigen oder zerklüfteten Querschnittsformen des durchlaufenden Werkstücks kann eine weitgehende Ummantelung in der Regel nur erreicht werden, wenn die Ummantelungseinrichtung zusätzlich zu der Kaschierwalze Ummantelungsrollen und/oder Formschuhe aufweist, die bevorzugt auf der Führungseinrichtung gegenüberliegenden Seite der Förderfläche angeordnet und an die Außenkontur der durchlaufenden Werkstücke anpassbar sind. Hierdurch wird ermöglicht, dass das streifenförmige Beschichtungsmaterial von verschiedenen Richtungen an das durchlaufende Werkstück angedrückt und somit zuverlässig aufgebracht werden kann. Insbesondere dienen die Formschuhe primär zum Glätten und Formstabilisieren des Beschichtungsmaterials.

Eine häufig anzutreffende Profilform ist dadurch gekennzeichnet, dass sie eine seitlich anliegende Dichtlippe besitzt, die ebenfalls mit dem streifenförmigen Beschichtungsmaterial zu ummanteln ist. Um ein ordnungsgemäßes Ummanteln der Dichtlippe sicher zu stellen, weißt die Vorrichtung gemäß einer Weiterbildung der vorliegenden Erfindung eine zweite Spreizeinrichtung zum seitlichen Aufspreizen der Dichtlippe gegenüber dem Werkstück auf, die bevorzugt mindestens eine Scheibe umfasst, die im Wesentlichen in Durchlaufrichtung drehbar ist. Dabei ist es besonders bevorzugt, dass die Scheibe mit einem der Transporträder auf einer gemeinsamen Welle montiert ist. Mit dieser technisch einfachen Maßnahme wird erreicht, dass die Dichtlippe während des Durchlaufens des Werksstücks automatisch aufgespreizt und dann zuverlässig mit dem streifenförmigen Beschichtungsmaterial ummantelt werden kann.

Vor allem leichtgewichtige, hohlkörperige Werkstücke können unter Umständen dazu neigen, nicht nur zu schleudern oder sich zu verdrehen, sondern sich auch von der' Führungseinrichtung abzuheben. Um dies zu vermeiden, ist es gemäß einer Weiterbildung der vorliegenden Erfindung vorgesehen, dass die Vorrichtung weiter eine zweite Führungseinrichtung aufweist, die bevorzugt auf der der Führungseinrichtung gegenüberliegenden Seite der Förderfläche angeordnet ist. Hierdurch wird nicht nur ein Abheben des durchlaufenden Werkstücks vermieden, sondern auch die Führung des Werkstücks in Längsrichtung weiter verbessert. Dabei kann die zweite Führungseinrichtung ein langgestrecktes Element, bevorzugt einen gespannten Draht, umfassen, das im Wesentlichen parallel zu der Förderfläche vorgesehen und von dieser beabstandet ist. Dies stellt eine einfache und gleichzeitig hoch wirksame technische Lösung dar, um einen stabilen Durchlauf des Werkstücks sicher zu stellen.

### Kurze Beschreibung der Zeichnungen

Im Folgenden wird unter Bezugnahme auf die beigefügten Zeichnungen die vorliegenden Erfindung näher erläutert und beschrieben. Es zeigen:
- Figur 1: eine schematische Ansicht einer Transport- und Führungseinrichtung gemäß der vorliegenden Erfindung;
- Figur 2: eine schematische Ansicht einer Vorrichtung zum Durchlaufummanteln von flexiblen, strangförmigen Werkstücken mit einem streifenförmigen Beschichtungsmaterial gemäß der vorliegenden Erfindung;
- Figur 3: eine schematische, teilweise geschnittene Ansicht eines zu ummantelnden flexiblen, strangförmigen Werkstücks;
- Figur 4a: eine schematische Schnittansicht eines Transportrades gemäß der vorliegenden Erfindung;
- Figur 4b: eine schematische Seitenansicht eines Transportrades gemäß der vorliegenden Erfindung;

### Ausführliche Beschreibung bevorzugter Ausführungsformen

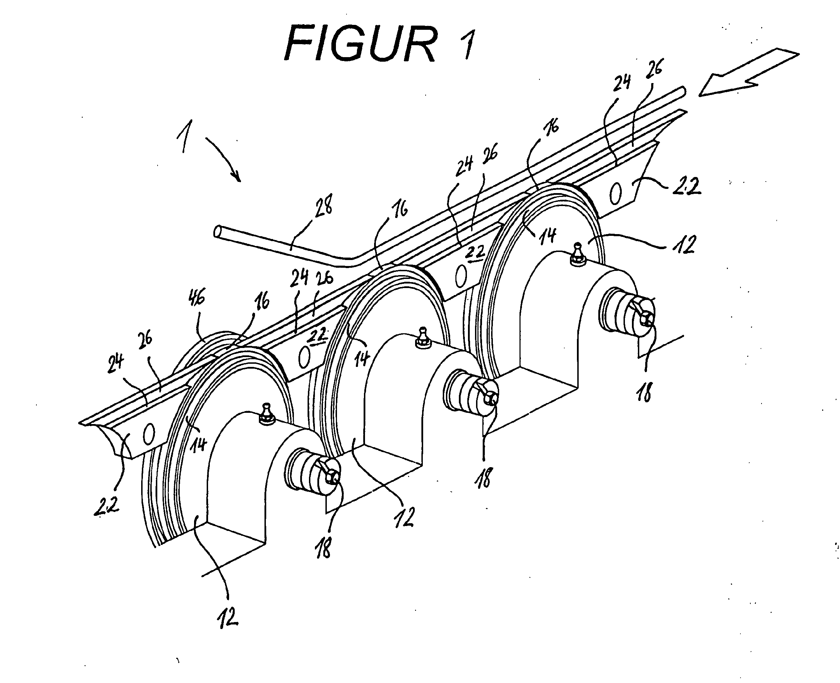

Figur 1 zeigt eine schematische Ansicht einer Transporteinrichtung und einer Führungseinrichtung, die Teil einer Vorrichtung 1 zum Durchlaufummanteln von flexiblen, strangförmigen Werkstücken mit einem streifenförmigen Beschichtungsmaterial gemäß der vorliegenden Erfindung sind. Die Transporteinrichtung wird durch angetriebene Transporträder 12 gebildet, die jeweils eine Umfangsfläche 14 aufweisen, mittels derer ein Werkstück entlang der Vorrichtung 1 bewegbar ist. Die Transporträder 12 sind auf Wellen 18 montiert, die durch nicht gezeigte Elemente angetrieben sind.

Auf einer oder mehrerer Wellen 18 sind neben einem Transportrad 12 eine Spreizscheibe 46 zum Aufspreizen einer Dichtlippe des Werkstücks oder dergleichen angeordnet. Der Durchmesser der Spreizscheibe 46, ist von der Geometrie des zu ummantelnden Werkstücks abhängig, ist jedoch im allgemeinen größer als der jenige der Transporträder 12, um die gewünschte Spreizwirkung zu erzielen.

Die Führungseinrichtung der Vorrichtung 1 wird durch Führungselemente 22 gebildet, die jeweils eine Führungsfläche 24 umfassen, die gemeinsam eine Förderfläche definieren, entlang derer ein Werkstück mittels der Transporträder 12 gefördert werden kann. Die Führungselemente 22 sind in der Durchlaufrichtung jeweils auf beiden Seiten eines Transportrades 12 angeordnet, so dass zwischen zwei benachbarten Transporträdern 12 jeweils ein Führungselement 22 vorgesehen ist. Insbesondere sind die Führungselemente 22 derart ausgebildet, dass sie jeweils eng an das benachbarte Transportrad 12 heranreichen, so dass die Führungsflächen 24 der Führungselemente 22 und die Umfangsflächen 14 der Transporträder 12 eine im wesentlichen durchgängige Förderfläche bilden. Im vorliegenden Ausführungsbeispiel ist die den Transporträdern 12 zugewandte Außenkontur der Führungselemente 22 jeweils auf den Radius der Transporträder 12 abgestimmt, so dass sich eine geschlossene und stabile Bauform ergibt.

Die Führungselemente 22 besitzen jeweils einen Führungsabschnitt 26, der von der Führungsfläche 24 im Wesentlichen senkrecht zu dieser hervorsteht. Die Führungselemente 22 sind hierbei vorzugsweise aus Materialien mit möglichst geringen Reibungskoeffizienten zu fertigen. Im vorliegenden Ausführungsbeispiel wurde vorzugsweise reines Teflon eingesetzt.

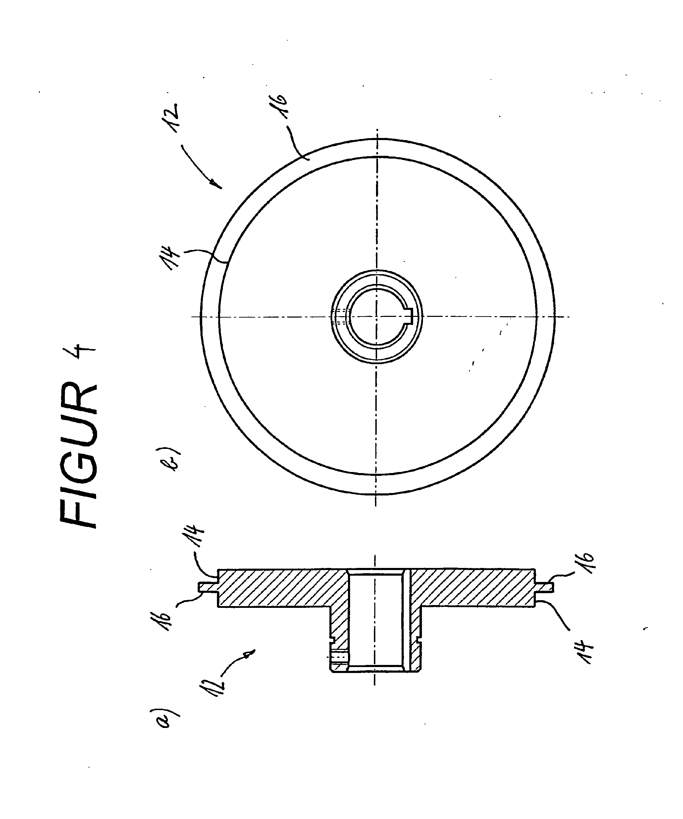

Die Ausbildung der Transporträder 12 gemäß der vorliegenden Ausführungsform ist in Figur 4 genauer gezeigt. Danach besitzen die Transporträder 12 entlang ihrer Umfangsfläche 14 jeweils einen Führungsvorsprung 16, der als umlaufender Führungsring ausgebildet ist. Wie in Figur 1 zu erkennen ist, sind die Transporträder 12 derart zu den Führungselementen 22 ausgerichtet, dass die Führungsvorsprünge 16 der Transporträder 12 mit den Führungsabschnitten 26 der Führungselemente 22 fluchten.

Obwohl in den Figuren nicht ausdrücklich dargestellt, weisen die Umfangsflächen 14 der Transporträder 12 eine adhäsionserzeugende Oberfläche auf, die beispielsweise durch eine Rändelung erzielt werden kann.

Darüber hinaus besitzt die Vorrichtung 1 eine zweite Führungseinrichtung in der Form eines Führungsdrahts 28, der auf der den Führungselementen 22 gegenüberliegenden Seite der Förderfläche angeordnet ist. Dabei ist der Abstand des Führungsdrahtes von der Förderfläche, d. h. den Führungsflächen 24 der Führungselemente 22 auf die Abmessungen des zu ummantelnden Werkstücks abstimmbar.

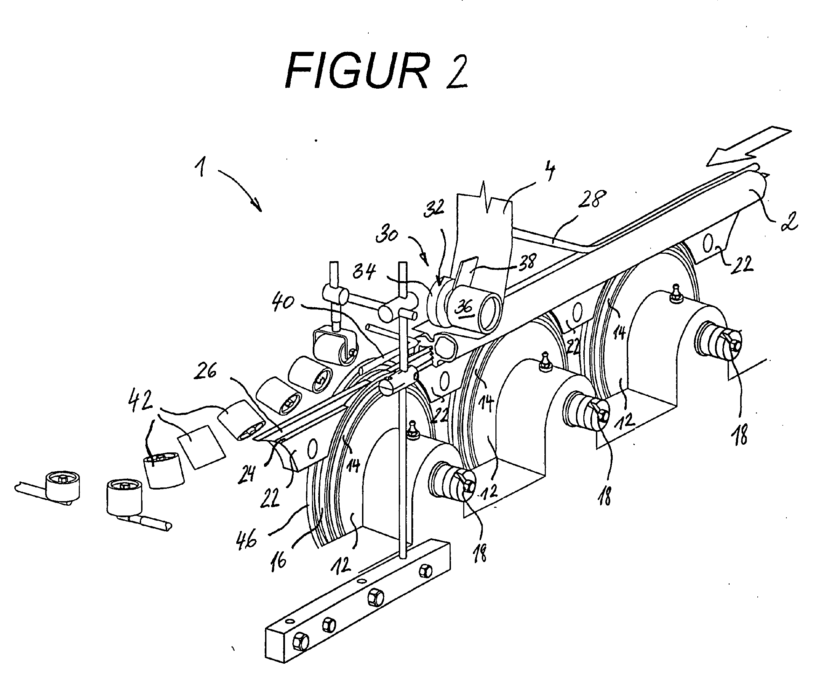

Figur 2 zeigt schematisch eine vollständige Vorrichtung 1 zum Durchlaufummanteln von flexiblen, strangförmigen Werkstücken gemäß der vorliegenden Erfindung, die neben den in Figur 1 gezeigten Transport- und Führungseinrichtungen weitere Bauteile umfasst, insbesondere eine Ummantelungseinrichtung. Die Ummantelungseinrichtung weist eine Kaschierwalze 30 auf, die einen ersten Walzenabschnitt 34 größeren Durchmessers und einen zweiten Walzenabschnitt 36 kleineren Durchmessers umfasst, zwischen denen ein Spreizmesser 38 angeordnet ist, das sich parallel zur Durchlaufsrichtung des Werkstücks 2 erstreckt. In Durchlaufrichtung hinter der Kaschierwalze 32 ist ein Spreizdraht 40 vorgesehen, der mit dem Spreizmesser 38 im Wesentlichen fluchtet. An diesen schließen sich in Durchlaufrichtung weitere Ummantelungsrollen 42 an, die verschiedene Orientierungen besitzen.

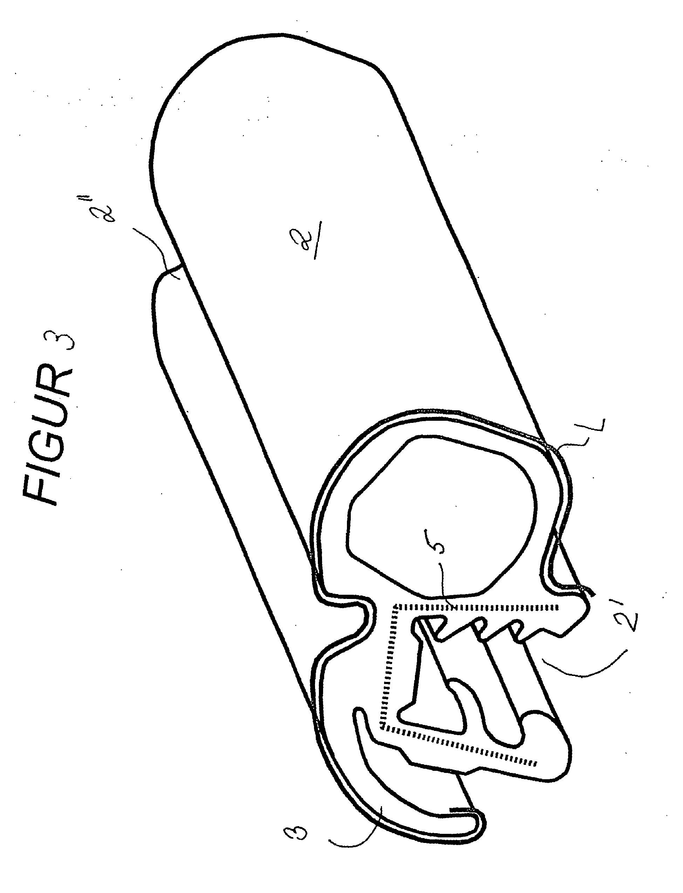

Figur 3 zeigt schematisch eine teilweise geschnittene Ansicht eines zu ummantelnden, flexiblen, strangförmigen Werkstücks 2. Bei dem dargestellten Werkstück handelt es sich um ein Dichtungsprofil, wie es beispielsweise in der Automobilindustrie häufig eingesetzt wird. Derartige Dichtungsprofile bestehen beispielsweise aus Gummi, aus gummiähnlichen Stoffen oder aus elastischen Kombinationsstoffen. Das beispielhafte Profil wird in seiner gesamten Länge durch eine eingegossene, flexible Aluminiumstruktur 5 stabilisiert. Der Querschnitt des Werkstücks 2 ist in Längsrichtung des Werkstücks im Wesentlichen unveränderlich, ansonsten jedoch weitgehend beliebig und kann dementsprechend geschlossene bzw. hohle Abschnitte sowie ganz oder teilweise offene Abschnitte umfassen. Das Dichtungsprofil der beispielhaften Ausführungsform besitzt eine sich in Werkstücklängsrichtung erstreckende Führungsrille 2', die durch einen im Wesentlichen U-förmigen, nach unten offenen Abschnitt gebildet ist, eine sich ebenfalls in Werkstücklängsrichtung erstreckende obere Rille 2' ', sowie eine seitlich vorgesehene Dichtlippe 3. Der zu ummantelnde Bereich des Dichtungsprofils 2 ist in Figur 3 durch eine zusätzliche Linie L bezeichnet. Es ist jedoch selbstverständlich, dass das zu ummantelnde Werkstück auch weitgehend beliebige andere Querschnittsformen aufweisen kann, die eine Führungsrille 2 besitzen. Die Oberflächengestaltung in der Führungsrille 2 kann ebenfalls variabel sein.

Als Beschichtungsmaterial kommen prinzipiell die unterschiedlichsten Stoffe je nach Anwendungszweck in Frage. Im Hinblick auf die optischen und funktionellen Eigenschaften ist es jedoch häufig bevorzugt, textile Stoffe oder flexible Kunststoffe als Beschichtungsmaterial zu verwenden, da diese ein gutes Aussehen, angenehme Griffeigenschaften und eine hohe Dauerhaftigkeit besitzen.

Der Betrieb der erfindungsgemäßen Vorrichtung zum Durchlaufummanteln von flexiblen, strangförmigen Werkstücken 2mit einem streifenförmigen Beschichtungsmaterial 4 wird nachfolgend unter Bezugnahme auf Figur 2 beschrieben. Das zu ummantelnde Werkstück 2 wird in Durchlaufrichtung, die in Figur 2 mit einem Pfeil gekennzeichnet ist, in die Vorrichtung 1 derart eingefördert, dass die Führungsabschnitte 26 der Führungselemente 22 bzw. die Führungsvorsprünge 16 der Transporträder 12 in die Führungsrille 2' des Werkstücks 2 eingreifen. Darüber hinaus liegt das Profil mit seinen Unterkanten auf den Führungsflächen 24 der Führungselemente 22 sowie den Umfangsflächen 14 der Transporträder 12 auf. Schließlich wird das Werkstück 2 von oben her noch durch den Führungsdraht 28 geführt, der im vorliegenden Ausführungsbeispiel die obere Rille 2'' des Werkstücks eingreift. Durch dieses abgestimmte Zusammenwirken von Werkstück 2, Transporträdern 12, Führungselementen 22 und Führungsdraht 28 wird das Werkstück 2 während des Durchlaufs durch die Vorrichtung 1 sicher geführt, so dass ein Schleudern oder Verdrehen des Werkstücks praktisch ausgeschlossen ist.

Das eingeförderte Werkstück 2 gelangt in Durchlaufrichtung, nach dem Passieren verschiedener Oberflächenaktivierungen, zu der oben beschriebenen Ummantelungseinrichtung mit der Kaschierwalze 32. An dieser Stelle wird simultan und kontinuierlich das streifenförmige Beschichtungsmaterial 4 zugefördert und von oben her auf das Werkstück 2 aufgebracht. Um das Beschichtungsmaterial 4 auch im Bereich der oberen Rille 2 des Werkstückes vollständig aufzubringen, wird das Kaschiermaterial mittels des Spreizmessers 38, welches sich zwischen den beiden Abschnitten der Kaschierwalze befindet, in die obere Rille 2 eingepresst. Die dadurch erreichte Spreizwirkung wird durch die unterschiedlichen Durchmesser der Kaschierwalze unterstützt. Das nach der Kaschierwalze angeordnete Führungselement 40 hält die Aufspreizung des Werkstückes aufrecht und formt das aufgebrachte Beschichtungsmaterial in der oberen Rille 2 nach. Danach erfolgt das weitere Aufbringen des Beschichtungsmaterials auf die gesamte Oberfläche des Werkstückes mittels der Ummantelungsrollen 42.

Wie in Figur 2 gut zu erkennen ist, wird das flexible, strangförmige Werkstück 2 auch im Bereich der Kaschierwalze 32 und der weiteren Förderstrecke in Durchlaufrichtung sicher durch die Transporträder 12 mit ihrer Umfangsfläche 14 und ihrem Führungsvorsprung 16 sowie die Führungselemente 22 mit ihrer Führungsfläche 24 und ihrem Führungsabschnitt 26 geführt, so dass ein Verdrehen oder Schleudern des Werkstücks weiterhin ausgeschlossen ist.

In Durchlaufrichtung hinter der Kaschierwalze 32 folgen weitere Ummantelungsrollen 42, die das streifenförmige Beschichtungsmaterial 4 nicht nur von oben her, sondern auch von verschiedenen seitlichen Richtungen sicher an das durchlaufende Werkstück 2 anhaften. Zu diesen Zweck sind mehrere Ummantelungsrollen 42 vorgesehen, deren Achsen verschiedene Neigungen besitzen. Obwohl in Figur 2 nicht ausdrücklich dargestellt, wird das flexible, strangförmige Werkstück 2 selbstverständlich auch im Bereich der Ummantelungsrollen 42 durch Transporträder 12 und Führungselemente 22 mit den oben beschriebenen Merkmalen sicher geführt.

Um eine ordnungsgemäße Ummantelung der Dichtlippe 3 des durchlaufenden Werkstücks 2 sicher zu stellen, besitzt die Vorrichtung 1 wie oben beschrieben eine oder auch mehrere hintereinander folgende Spreizscheiben 46, die im vorliegenden Ausführungsbeispiel jeweils gemeinsam mit einem Transportrad 12 auf einer Welle montiert sind und sich dementsprechend mit dieser mitdrehen. Der Durchmesser der Spreizscheibe 46 ist derart ausgelegt, dass wenn das Werkstück 2 das entsprechende Transportrad 12 passiert, die Dichtlippe 3 an dem äußeren Umfang der Spreizscheibe 46 zum Anliegen kommt und in eine im Wesentlichen horizontale Richtung aufgespreizt wird. Hierdurch kommt die Dichtlippe 3 mit dem oberseitig bereits aufgebrachten, streifenförmigen Beschichtungsmaterial 4 zur Anlage, so dass die gewünschte Ummantelung erreicht wird.

Nach dem Passieren der Spreizscheibe 46 und der Ummantelungsrollen 42 ist der Ummantelungsvorgang abgeschlossen und das Werkstück wird aus der Vorrichtung 1 ausgefördert, wobei es selbstverständlich weiterhin wie vorstehend beschrieben sicher durch die erfindungsgemäßen Transportrollen und Führungselemente geführt wird.

## Patentansprüche

1. Vorrichtung (1) zum Ummanteln von flexiblen, strangförmigen Werkstücken (2) mit einem streifenförmigen Beschichtungsmaterial (4), umfassend eine Förderstrecke, auf der die Werkstücke in einer vorbestimmten Durchlaufrichtung entlang einer Förderfläche bewegbar sind, wobei die Förderstrecke aufweist:
- eine Transporteinrichtung, die angetriebene Transporträder (12) mit jeweils einer Umfangsfläche (14) umfasst, mittels derer das Werkstück (2) entlang der Förderstrecke bewegbar ist;
- eine Führungseinrichtung, die Führungselemente (22) mit jeweils einer Führungsfläche (24) umfasst, die gemeinsam die Förderfläche definieren;
- eine Ummantelungseinrichtung (32) zum Aufbringen des streifenförmigen Beschichtungsmaterials (4) auf das Werkstück (2) im Durchlaufbetrieb,
**dadurch gekennzeichnet, dass** die Führungselement (22) in der Durchlaufrichtung jeweils auf beiden Seiten eines Transportrades (12) angeordnet sind.

2. Vorrichtung nach Anspruch 1, **dadurch gekennzeichnet, dass** zwischen zwei benachbarten Transporträdern (12) jeweils ein Führungselement (22) vorgesehen ist.

3. Vorrichtung nach einem der vorhergehenden Ansprüche, **dadurch gekennzeichnet, dass** die Führungsflächen (24) der Führungselemente (22) derart angeordnet sind, dass das Werkstück (2) im wesentlichen entlang der gesamten Förderstrecke entlang der Förderfläche führbar ist.

4. Vorrichtung nach einem der vorhergehenden Ansprüche, **dadurch gekennzeichnet, dass** die den Transporträdern (12) zugewandte Außenkontur der Führungselemente (22) jeweils auf den Radius der Transporträder abgestimmt ist.

5. Vorrichtung nach einem der vorhergehenden Ansprüche, **dadurch gekennzeichnet, dass** die Führungselemente (22) jeweils einen Führungsabschnitt (26) besitzen, der von der Führungsfläche (24) bevorzugt im wesentlichen senkrecht zu diesem hervorsteht, wobei die Führungselemente (22) besonders bevorzugt aus Materialien mit geringen Reibungskoeffizienten wie insbesondere reinem Teflon hergestellt sind.

6. Vorrichtung nach einem der vorhergehenden Ansprüche, **dadurch gekennzeichnet, dass** die Transporträder (12) entlang ihrer Umfangsfläche (14) jeweils einen Führungsvorsprung (16) aufweisen, der bevorzugt als im wesentlichen umlaufender Führungsring (16) ausgebildet ist, welcher besonders bevorzugt mit den Führungsabschnitten (26) der Führungselemente (22) fluchtet.

7. Vorrichtung nach einem der vorhergehenden Ansprüche, **dadurch gekennzeichnet, dass** die Umfangsflächen (14) der Transporträder (12) eine adhäsionserzeugende Oberfläche aufweisen und bevorzugt gerändelt sind.

8. Vorrichtung nach einem der vorhergehenden Ansprüche, **dadurch gekennzeichnet, dass** die Ummantelungseinrichtung eine Kaschierwalze (32) aufweist, die einen ersten Abschnitt (34) und einen zweiten Abschnitt (36) umfasst, zwischen denen eine erste Spreizeinrichtung(38, 40), die sich bevorzugt im wesentlichen parallel zur Durchlaufrichtung des Werkstücks erstreckt, angeordnet ist.

9. Vorrichtung nach Anspruch 8, **dadurch gekennzeichnet, dass** der erste (34) und der zweite (36) Abschnitt der Kaschierwalze (32) voneinander unterschiedliche Durchmesser aufweisen.

10. Vorrichtung nach Anspruch 8 oder 9, **dadurch gekennzeichnet, dass** die erste Spreizeinrichtung (38, 40) ein Spreizmesser (38) und einen sich in Durchlaufrichtung hinter dem Messer erstreckenden Spreizdraht (40) aufweist.

11. Vorrichtung nach einem der vorhergehenden Ansprüche, **dadurch gekennzeichnet, dass** die Ummantelungseinrichtung Ummantelungsrollen (42) und/oder Formschuhe aufweist, die bevorzugt auf der der Führungseinrichtung gegenüberliegenden Seite der Förderfläche angeordnet und an die Außenkontur der durchlaufenden Werkstücke (2) anpassbar sind.

12. Vorrichtung nach einem der vorhergehenden Ansprüche, **dadurch gekennzeichnet, dass** sie weiter eine zweite Spreizeinrichtung (46) zum seitlichen Aufspreizen des Werkstücks (2) aufweist, die bevorzugt mindestens eine Scheibe (46) umfasst, die im wesentlichen in Durchlaufrichtung drehbar ist.

13. Vorrichtung nach Anspruch 12, **dadurch gekennzeichnet, dass** die Scheibe (46) mit einem Transportrad (12) auf einer gemeinsamen Welle (18) montiert ist.

14. Vorrichtung nach einem der vorhergehenden Ansprüche, **dadurch gekennzeichnet, dass** sie weiter eine zweite Führungseinrichtung (28) aufweist, die bevorzugt auf der der Führungseinrichtung gegenüberliegenden Seite der Förderfläche angeordnet ist.

15. Vorrichtung nach einem der vorhergehenden Ansprüche, **dadurch gekennzeichnet, dass** die zweite Führungseinrichtung (28) ein langgestrecktes Element, bevorzugt einen Draht (28), umfasst, das im wesentlichen parallel zur Förderfläche vorgesehen und von dieser beabstandet ist.

16. Verwendung einer Vorrichtung (1) nach einem der vorhergehenden Ansprüche zum Durchlaufummanteln von flexiblen, strangförmigen, insbesondere hohlkörperigen Werkstücken (2) mit einem streifenförmigen Beschichtungsmaterial (4).

17. Verwendung nach Anspruch 16, **dadurch gekennzeichnet, dass** die Werkstücke (2) aus Gummi, aus gummiähnlichen Stoffen oder aus elastischen Kombinationsstoffen bestehen und/oder textile Stoffe oder flexible Kunststoffe als Beschichtungsmaterial (4) verwendet werden.

## Claims

1. Device (1) for covering flexible, elongated workpieces (2) with a strip-like coating material (4), comprising a conveying path, on which the workpieces can be moved in a predetermined passage direction along a conveying surface, wherein the conveying path has:
- a transport device, which comprises driven transport wheels (12) having in each case a peripheral surface (14), by means of which the workpiece (2) can be moved along the conveying path;
- a guide device, which comprises guide elements (22) having in each case a guide surface (24) which together define the conveying surface;
- a covering device (32) for applying the strip-like coating material (4) to the workpiece (2) in continuous operation,
**characterised in that** the guide elements (22) are arranged in the passage direction in each case on both sides of a transport wheel (12).

2. Device according to claim 1, **characterised in that** in each case one guide element (22) is provided between two adjacent transport wheels (12).

3. Device according to one of the preceding claims, **characterised in that** the guide surfaces (24) of the guide elements (22) are arranged such that the workpiece (2) can be guided along the conveying surface essentially along the entire conveying path.

4. Device according to one of the preceding claims, **characterised in that** the outer contour of the guide elements (22) facing the transport wheels (12) is matched in each case to the radius of the transport wheels.

5. Device according to one of the preceding claims, **characterised in that** the guide elements (22) have in each case a guide section (26) which projects from the guide surface (24) preferably essentially vertically to the latter, wherein the guide elements (22) are produced particularly preferably from materials having low coefficients of friction, such as in particular pure Teflon.

6. Device according to one of the preceding claims, **characterised in that** the transport wheels (12) have along their peripheral surface (14) in each case a guide projection (16) which is preferably designed as an essentially annular guide ring (16) which is aligned particularly preferably with the guide sections (26) of the guide elements (22).

7. Device according to one of the preceding claims, **characterised in that** the peripheral surfaces (14) of the transport wheels (12) have an adhesion-producing surface and are preferably knurled.

8. Device according to one of the preceding claims, **characterised in that** the covering device has a laminating roller (32) which comprises a first section (34) and a second section (36), between which a first spreading device (38, 40), which extends preferably essentially parallel to the passage direction of the workpiece, is arranged.

9. Device according to claim 8, **characterised in that** the first (34) and the second (36) section of the laminating roller (32) have diameters which are different from one another.

10. Device according to claim 8 or 9, **characterised in that** the first spreading device (38, 40) has a spreading knife (38) and a spreading wire (40) extending behind the knife in passage direction.

11. Device according to one of the preceding claims, **characterised in that** the covering device has covering rollers (42) and/or shaping shoes which are preferably arranged on the side of the conveying surface opposite the guide device and can be adapted to the outer contour of the passing workpieces (2).

12. Device according to one of the preceding claims, **characterised in that** it also has a second spreading device (45) for lateral spreading of the workpiece (2), which preferably comprises at least one disc (46), which can be rotated essentially in passage direction.

13. Device according to claim 12, **characterised in that** the disc (46) with a transport wheel (12) is mounted on a common shaft (18).

14. Device according to one of the preceding claims, **characterised in that** it also has a second guide device (28), which is preferably arranged on the side of the conveying surface opposite the guide device.

15. Device according to one of the preceding claims, **characterised in that** the second guide device (28) comprises an elongated element, preferably a wire (28), which is provided essentially parallel to the conveying surface and at a distance from the latter.

16. Use of a device (1) according to one of the preceding claims for continuous covering of flexible, elongated, in particular hollow-bodied workpieces (2) with a strip-like coating material (4).

17. Use according to claim 16, **characterised in that** the workpieces (2) consist of rubber, of rubber-like materials or of resilient combination materials and/or textile materials or flexible plastics are used as coating material (4).

## Revendications

1. Dispositif (1) pour enrober des pièces d'oeuvre (2) flexibles, se présentant sous forme de boudin, avec un matériau de revêtement (4) se présentant sous forme de bande, comprenant un chemin de transport, sur lequel les pièces d'oeuvre sont déplaçables, dans un sens de passage prédéterminé,le long d'une surface de transport, le chemin de transport présentant :
- un dispositif de transport, comprenant des roues de transport (12) entraînées, ayant chacune une surface périphérique (14), au moyen de laquelle la pièce d'oeuvre (2) est déplaçable le long du chemin de transport ;
- un dispositif de guidage, comprenant des éléments de guidage (22), ayant chacun une surface de guidage (24), qui définissent conjointement la surface de transport ;
- un dispositif d'enrobage (32), pour appliquer le matériau de revêtement (4), en forme de bande, sur la pièce d'oeuvre (2) en un fonctionnement ininterrompu.
**caractérisé en ce que** les éléments de guidage (22) sont disposés, dans la direction de passage, chaque fois sur les deux côtés d'une roue de transport (12).

2. Dispositif selon la revendication 1, **caractérisé en ce qu'**un élément de guidage (22) est chaque fois prévu entre deux roues de transport (12) voisines.

3. Dispositif selon l'une des revendications précédentes, **caractérisé en ce que** les surfaces de guidage (24) des éléments de guidage (22) sont disposées de manière que la pièce d'oeuvre (2) puisse être guidée sensiblement le long de l'ensemble du chemin de transport, le long de la surface de transport.

4. Dispositif selon l'une des revendications précédentes, **caractérisé en ce que** le contour extérieur, tourné vers les roues de transport (12), des éléments de guidage (22) est chaque fois adapté au rayon des roues de transport.

5. Dispositif selon l'une des revendications précédentes,
**caractérisé en ce que** les éléments de guidage (22) comprennent chacun un tronçon de guidage (26), ressortant de la surface de guidage (24), de préférence sensiblement perpendiculairement à celui-ci, les éléments de guidage (22) étant fabriqués, de façon particulièrement préférée, en des matériaux à faibles coefficients de frottement, tels qu'en particulier du Teflon pur.

6. Dispositif selon l'une des revendications précédentes,
**caractérisé en ce que** les roues de transport (12) présentent chacune, le long de leur surface périphérique (14), une saillie de guidage (16), réalisée de préférence sous forme de bague de guidage (16) faisant pratiquement le pourtour, placée, de façon particulièrement préférée, en alignement avec les tronçons de guidage (26) des éléments de guidage (22).

7. Dispositif selon l'une des revendications précédentes, **caractérisé en ce que** les surfaces périphériques (14) des roues de transport (12) présentent une surface générant une adhésion et sont de préférence moletées.

8. Dispositif selon l'une des revendications précédentes, **caractérisé en ce que** le dispositif d'enrobage présente un rouleau de scellage (32), comprenant un premier tronçon (34) et un deuxième tronçon (36), entre lesquels est disposé un premier dispositif d'écartement (38, 40), s'étendant de préférence sensiblement parallèlement à la direction de passage de la pièce d'oeuvre.

9. Dispositif selon la revendication 8, **caractérisé en ce que** le premier (34) et le deuxième (36) tronçon du rouleau de scellage (32) présentent des diamètres différents l'un de l'autre.

10. Dispositif selon la revendication 8 ou 9, **caractérisé en ce que** le premier dispositif d'écartement (38, 40) présente une lame d'écartement (38) et un fil d'écartement (40), s'étendant derrière la lame, en observant dans la direction de passage.

11. Dispositif selon l'une des revendications précédentes, **caractérisé en ce que** le dispositif d'enrobage comprend des rouleaux d'enrobage (42) et/ou des patins de formage, disposés de préférence sur le côté, opposé au dispositif de guidage, de la surface de transport et adaptés au contour extérieur des pièces d'oeuvre (2) qui passent.

12. Dispositif selon l'une des revendications précédentes, **caractérisé en ce qu'**il comprend en outre un deuxième dispositif d'écartement (46), pour l'écartement latéral de la pièce d'oeuvre (2), comprenant de préférence au moins un disque (46), susceptible de tourner sensiblement dans la direction de passage.

13. Dispositif selon la revendication 12, **caractérisé en ce que** le disque (46) est monté, avec une roue de transport (12), sur un arbre (18) commun.

14. Dispositif selon l'une des revendications précédentes, **caractérisé en ce qu'**il présente en outre un deuxième dispositif de guidage (28), disposé de préférence sur le côté, opposé au dispositif de guidage, de la surface de transport.

15. Dispositif selon l'une des revendications précédentes, **caractérisé en ce que** le deuxième dispositif de guidage (28) comprend un élément allongé, de préférence un fil (28), prévu sensiblement parallèlement à la surface de transport et espacé de celle-ci

16. Utilisation d'un dispositif (1) selon l'une des revendications précédentes, pour l'enrobage en continu de pièces d'oeuvre (2) flexibles, en forme de boudins, en particulier en forme de corps creux, avec un matériau de revêtement (4) en forme de bande.

17. Dispositif selon la revendication 16, **caractérisé en ce que** les pièces d'oeuvre (2) sont composées de caoutchouc, de substances analogues à du caoutchouc, ou de substances combinées élastiques et/ou de substances textiles ou de matières synthétiques flexibles, en tant que matériau de revêtement (4).
